# EUROPEAN PATENT APPLICATION

(11) **EP 4 848 650 A1**
(43) Date of publication of application: **02.12.2026**
(21) Application number: 26746167.1
(22) Date of filing: 12.01.2026
(51) Int. Cl.: H04L 5/14, H04L 5/00, H04W 72/21, H04W 72/0453, H04W 72/0457, H04W 72/1263, H04W 72/232

(54) **METHOD AND APPARATUS FOR TRANSMISSION AND RECEPTION BASED ON INTER-CARRIER SWITCHING**

(30) Priority: 24.01.2025 KR 20250011682
(71) Applicant: Samsung Electronics Co., Ltd., Suwon-si, Gyeonggi-do 16677 (KR)
(72) Inventor: KIM, Taekhoon, Suwon-si, Gyeonggi-do 16677 (KR); PARK, Sungjin, Suwon-si, Gyeonggi-do 16677 (KR); LIM, Seongmok, Suwon-si, Gyeonggi-do 16677 (KR); JI, Hyoungju, Suwon-si, Gyeonggi-do 16677 (KR); LEE, Joonyoung, Suwon-si, Gyeonggi-do 16677 (KR)
(74) Representative: Gulde & Partner
(86) International application number: PCT/KR2026/000615
(87) International publication number: WO 2026/160730

(57) **Abstract**

The present disclosure relates to a 5G or 6G communication system capable of achieving higher data transmission rates and maximizing frequency efficiency. Particularly, the present disclosure provides a method and apparatus for, when carrying out low-band carrier aggregation in a next-generation wireless communication system, maximizing utilization of low-band frequencies by allowing a terminal to alternately receive a plurality of downlink carriers.

## Description

### [Technical Field]

The disclosure relates to operations of a user equipment (UE) and a base station in a wireless (or mobile) communication system. Specifically, the disclosure relates to not only a UE structure-based UE capability configuration method for a UE to receive one carrier at a time with a time difference between carriers when receiving a combination of a plurality of frequency bands or carriers within a band in a wireless communication system, but also a method for a base station, which receives a report of a corresponding UE capability, to configure a downlink according to the UE capability when transmitting carrier aggregation of a corresponding combination to the UE, a method of configuring a time and an interval in which such a variable switching operation is performed, and an apparatus for performing the same.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

Meanwhile, along with the advancement of communication systems and the evolution of terminal receivers, research is being conducted on a process of receiving and processing, by a single terminal receiver, a plurality of carriers configured and transmitted through intra-band non-contiguous carrier aggregation, as well as on a method of configuring a band parameter and a frequency combination parameter of a terminal for supporting the same.

### [Disclosure]

### [Technical Problem]

Various embodiments of the disclosure are to provide an apparatus and a method capable of effectively providing services in a mobile communication system. In a wireless communication system, there is no particular constraint on a frequency band combination configured for transmission/reception based on carrier aggregation. However, from the perspective of implementing a product that actually supports carrier aggregation, there may be a probability that transmission/reception using carrier aggregation is unavailable, or has worse performance than transmission/reception using a single carrier, depending on a signal distortion caused by propagation characteristics of frequency bands or carriers included in a combination, or on interference between a plurality of carriers, or a design of a UE that supports transmission/reception of a plurality of carriers. If carrier aggregation is not practically available or performance is poor (e.g., the situation is observed in a combination of low frequencies of 1 GHz or less, which have large diffraction properties and thus good coverage characteristics but poor straight-line propagation properties and thus are disadvantageous in terms of interference control), it is not easy to solve in a current UE design method that needs to support most of the frequency bands with limited components and resources. Therefore, various embodiments of the disclosure are to provide a UE capability configuration method based on a UE structure, such that a UE may receive specific carrier aggregation with a time difference between carriers. Furthermore, various embodiments of the disclosure are to provide a method of configuring a time and an interval in which a variable switching operation is performed and a detailed method in which a base station configures carrier aggregation transmission, based on the same.

The technical subjects pursued in various embodiments of the disclosure are not limited to those mentioned above, and other technical subjects not mentioned herein may be considered by those skilled in the art from various embodiments of the disclosure to be described below.

### [Technical Solution]

An embodiment of the disclosure for solving the above problems provides a method performed by a user equipment (UE) in a wireless communication system. The method includes an operation of receiving a UE capability enquiry message from a base station, and an operation of transmitting, to the base station, a UE capability information message including first information indicating support for low band-low band (LB-LB) carrier aggregation (CA) based on switching between a first low band (LB) supporting frequency division duplex (FDD) and a second LB supporting a supplementary downlink (SDL), in response to the reception of the UE capability enquiry message, wherein, based on the first information, reception is not performed in the SDL of the second LB in a first interval in which transmission or reception is performed in an FDD band of the first LB, and transmission or reception is not performed in the FDD band of the first LB in a second interval in which reception is performed in an SDL band of the second LB.

In addition, an embodiment of the disclosure provides a method performed by a base station in a wireless communication system. The method includes an operation of transmitting a UE capability enquiry message to a UE, and an operation of receiving, from the UE, a UE capability information message including first information indicating support for low band-low band (LB-LB) carrier aggregation (CA) based on switching between a first low band (LB) supporting frequency division duplex (FDD) and a second LB supporting a supplementary downlink (SDL), in response to the transmission of the UE capability enquiry message, wherein, based on the first information, reception is not performed in the SDL of the second LB in a first interval in which transmission or reception is performed in an FDD band of the first LB, and transmission or reception is not performed in the FDD band of the first LB in a second interval in which reception is performed in an SDL band of the second LB.

In addition, an embodiment of the disclosure provides a UE in a wireless communication system. The UE includes a memory storing instructions, and a processing circuit connected to the memory, and configured to enable, at least partially based on execution of the instructions, the UE to perform: receiving a UE capability enquiry message from a base station; and transmitting, to the base station, a UE capability information message including first information indicating support for low band-low band (LB-LB) carrier aggregation (CA) based on switching between a first LB supporting frequency division duplex (FDD) and a second LB supporting a supplementary downlink (SDL), in response to the reception of the UE capability enquiry message, wherein, based on the first information, reception is not performed in the SDL of the second LB in a first interval in which transmission or reception is performed in an FDD band of the first LB, and transmission or reception is not performed in the FDD band of the first LB in a second interval in which reception is performed in an SDL band of the second LB.

In addition, an embodiment of the disclosure provides a base station in a wireless communication system. The base station includes a memory storing instructions, and a processing circuit connected to the memory, and configured to enable, at least partially based on execution of the instructions, the base station to perform: transmitting a UE capability enquiry message to a user equipment (UE); and receiving, from the UE, a UE capability information message including first information indicating support for low band-low band (LB-LB) carrier aggregation (CA) based on switching between a first LB supporting frequency division duplex (FDD) and a second LB supporting a supplementary downlink (SDL), in response to the transmission of the UE capability enquiry message, wherein, based on the first information, reception is not performed in the SDL of the second LB in a first interval in which transmission or reception is performed in an FDD band of the first LB, and transmission or reception is not performed in the FDD band of the first LB in a second interval in which reception is performed in an SDL band of the second LB.

Various embodiments of the disclosure as described above are merely some of preferred embodiments of the disclosure, and various embodiments in which technical features of the various embodiments of the disclosure are reflected may be derived and understood by those skill in the art, based on the detailed description to be described below in detail.

### [Advantageous Effects]

Various embodiments of the disclosure can provide an apparatus and a method capable of effectively providing services in a mobile communication system.

According to various embodiments of the disclosure, there may be provided a method in which a base station and a user equipment (UE) perform carrier aggregation by sufficiently utilizing an available frequency band regardless of a frequency band combination in a wireless communication system, and maximizing frequency efficiency, and an apparatus for performing the same.

The advantageous effects obtainable from various embodiments of the disclosure are not limited to those mentioned above, and other effects not mentioned herein may be clearly derived and understood by those skilled in the art, based on the following description.

### [Description of Drawings]

FIG. 1 illustrates a basic structure of a time-frequency domain in a wireless communication system according to an embodiment of the disclosure.
FIG. 2 illustrates a structure of a frame, a subframe, and a slot in a wireless communication system according to an embodiment of the disclosure.
FIG. 3 illustrates an example of a bandwidth part configuration in a wireless communication system according to an embodiment of the disclosure.
FIG. 4 illustrates an example of base station beam allocation according to transmission configuration indicator (TCI) state configurations in a wireless communication system according to an embodiment of the disclosure.
FIG. 5 illustrates radio protocol structures of a base station and a UE in single cell, carrier aggregation, and dual connectivity situations in a wireless communication system according to an embodiment of the disclosure.
FIG. 6 illustrates an example of a duplexer and in-band interference in low-band carrier transmission and reception.
FIG. 7 illustrates an example of a duplexer and a diplexer and inter-band interference in multi-low-band carrier transmission and reception.
FIG. 8 illustrates an example in which a base station and a UE perform inter-carrier switching-based transmission and reception in carrier aggregation.
FIG. 9 illustrates an example in which a base station and a UE perform inter-carrier switching-based transmission and reception in carrier aggregation.
FIG. 10 illustrates an example in which a base station and a UE perform inter-carrier switching-based transmission and reception in carrier aggregation.
FIG. 11 illustrates an example in which a base station and a UE perform inter-carrier switching-based transmission and reception according to a capability report of the UE.
FIG. 12 illustrates an example of a period in which a base station does not perform downlink transmission or a maximum period required for a UE to change a receiver in downlink switching-based carrier aggregation.
FIG. 13 illustrates a structure of a UE in a wireless communication system according to an embodiment of the disclosure.
FIG. 14 illustrates a structure of a base station in a wireless communication system according to an embodiment of the disclosure.

### [Mode for Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. In addition, the sizes of respective components do not entirely reflect their actual sizes. The same or corresponding components in each of the drawings are denoted by the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements. Furthermore, in describing the disclosure, a detailed description of known functions or configurations incorporated herein will be omitted when it is determined that the description may make the subject matter of the disclosure unnecessarily unclear. Also, the terms which will be described below are terms defined in consideration of the functions in the disclosure, and may be different according to users, intentions of the users, or customs. Accordingly, the definitions thereof should be made based on the contents throughout the specification.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" performs certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) (or eNode B), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20Gbps in the downlink and a peak data rate of 10Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20MHz in a frequency band of 3 to 6GHz or 6GHz or above, instead of transmitting signals using a transmission bandwidth up to 20MHz in a band of 2GHz used in LTE.

In addition, mMTC is being considered to support application services such as the Internet of things (IoT) in the 5G communication system. mMTC has requirements, such as support of connection of a large number of UEs in a cell, enhancement coverage of UEs, improved battery time, a reduction in the cost of a UE, and the like, in order to effectively provide the IoT. Since the IoT provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and may also requires a packet error rate of 10⁻⁵ or less. Therefore, for the services supporting URLLC, the 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

As used hereinafter, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. As used herein, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, or NR) developed beyond LTE-A, and in the following description, the "5G" may be the concept that covers the exiting LTE, LTE-A, and other similar services. Moreover, based on determinations by those skilled in the art, the disclosure may also be applied to other communication systems through some modifications without significantly departing from the scope of the disclosure.

In the following description, the term "a/b" may be understood as at least one of "a" and "b".

### [NR time-frequency resources]

Hereinafter, a frame structure of a 5G system will be described in more detail with reference to the accompanying drawings.

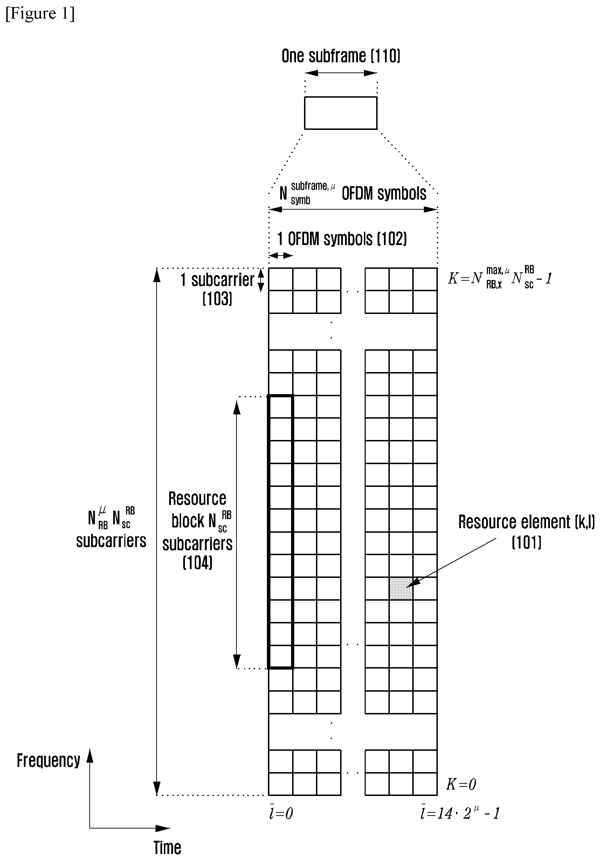

FIG. 1 illustrates a basic structure of a time-frequency domain, which is a radio resource domain used to transmit data or control channels, in a 5G system.

In FIG. 1, the horizontal axis represents a time domain, and the vertical axis represents a frequency domain. The basic unit of resources in the time and frequency domains is a resource element (RE) 101, which may be defined as one orthogonal frequency division multiplexing (OFDM) symbol 102 along the time axis and one subcarrier 103 along the frequency axis. In the frequency domain, ${N}_{SC}^{RB}$ (for example, 12) consecutive REs may constitute one resource block (RB) 104. In the time domain, one subframe 110 may include multiple OFDM symbols 102. For example, the length of one subframe may be 1ms.

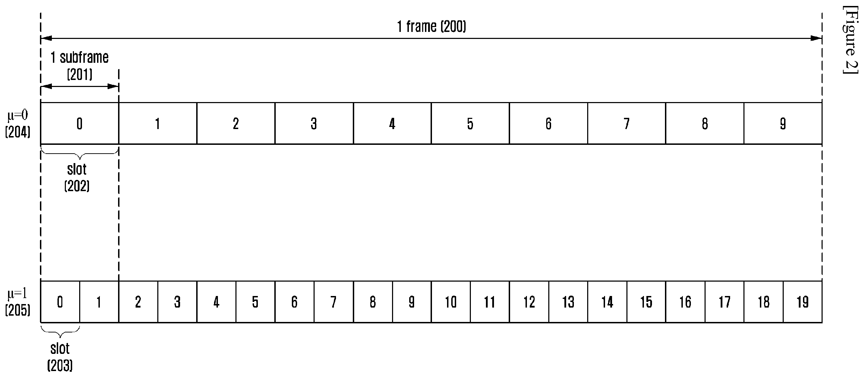

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (i.e., the number of symbols per one slot ${N}_{symb}^{slot} = 14$). One subframe 201 may include one or multiple slots 202 and 203, and the number of slots 202 and 203 per one subframe 201 may vary depending on configuration values µ for the subcarrier spacing 204 or 205. The example in FIG. 2 illustrates a case in which the subcarrier spacing configuration value is µ=0 (204), and a case in which µ=1 (205). In the case of µ=0 (204), one subframe 201 may include one slot 202, and in the case of µ=1 (205), one subframe 201 may include two slots 203. That is, the number of slots per one subframe ${N}_{slot}^{subframe , μ}$ may differ depending on the subcarrier spacing configuration value µ, and the number of slots per one frame ${N}_{slot}^{frame , μ}$ may differ accordingly. ${N}_{slot}^{subframe , μ}$ and ${N}_{slot}^{frame , μ}$ may be defined according to each subcarrier spacing configuration µ as in Table 1 below.

**[Table 1]**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

### [Bandwidth part (BWP)]

Next, a bandwidth part (BWP) configuration in a 5G communication system will be described in detail with reference to the accompanying drawings.

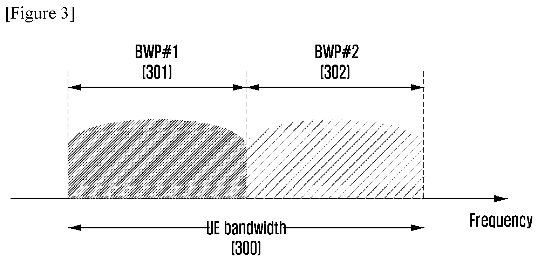

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure, for each bandwidth part, pieces of information as given below.

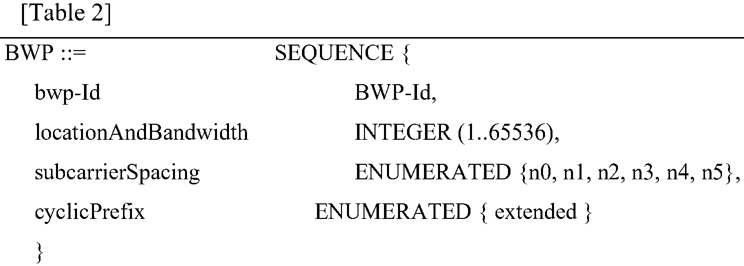

Of course, the above example is not limiting, and in addition to the configuration information given above, various parameters related to the bandwidth part may be configured for the UE. The base station may transfer the configuration information to the UE through higher layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to some embodiments, before a radio resource control (RRC) connection, an initial bandwidth part (BWP) for initial access may be configured for the UE by the base station through a master information block (MIB). More specifically, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured via the MIB may be considered identity (ID) 0. The base station may notify the UE of configuration information, such as frequency allocation information, time allocation information, and numerology, regarding control resource set #0 through the MIB. In addition, the base station may notify the UE of configuration information regarding the monitoring cycle and occasion for control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered to be 0.

The bandwidth part-related configuration supported by 5G may be used for various purposes.

According to some embodiments, if the bandwidth supported by the UE is smaller than the system bandwidth, this may be supported through the bandwidth part configuration. For example, the base station may configure the frequency location of the bandwidth part for the UE, so that the UE can transmit/receive data at a specific frequency location within the system bandwidth.

In addition, according to some embodiments, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and if data is to be transmitted/received at a specific subcarrier spacing, the bandwidth part configured as the corresponding subcarrier spacing may be activated.

In addition, according to some embodiments, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumption of the UE, the base station may configure a bandwidth part of a relatively small bandwidth (e.g., a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. To be more specific, the UE may be configured with a control resource set (i.e., CORESET) for a downlink control channel which may be used to transmit downlink control information (DCI) for scheduling a system information block (SIB) from the MIB of a physical broadcast channel (PBCH). The bandwidth of the control resource set configured by the MIB may be considered as the initial bandwidth part, and the UE may receive, through the configured initial bandwidth part, a physical downlink shared channel (PDSCH) through which an SIB is transmitted. In addition to receiving SIBs, the initial bandwidth part may also be used for other system information (OSI), paging, and random access.

### [Bandwidth part (BWP) change]

If one or more bandwidth parts have been configured for the UE, the base station may indicate, to the UE, a change (or switching or transition) of the bandwidth parts using a bandwidth part indicator field within DCI. As an example, if the currently activated bandwidth part of the UE is bandwidth part #1 301 in FIG. 3, the base station may indicate bandwidth part #2 302 by a bandwidth part indicator within DCI, and the UE may change the bandwidth part to bandwidth part #2 302 indicated by the bandwidth part indicator within received DCI.

As described above, DCI-based bandwidth part changing may be indicated by DCI for scheduling a PDSCH or a physical uplink shared channel (PUSCH), and thus, upon receiving a bandwidth part change request, the UE needs to be able to receive or transmit the PDSCH or PUSCH scheduled by the corresponding DCI in the changed bandwidth part with no problem. To this end, requirements for the delay time (T_{BWP}) required during a bandwidth part change are specified in the standards, and may be defined as given in Table 3 below, for example.

**[Table 3]**

| *µ* | **NR Slot length (ms)** | **BWP switch delay T_{BWP} (slots)** | |
|---|---|---|---|
| | | **Type 1^{Note 1}** | **Type 2^{Note 1}** |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time support type 1 or type 2, depending on the capability of the UE. The UE may report the supportable bandwidth part delay time type to the base station.

If the UE has received DCI including a bandwidth part change indicator in slot n, according to the requirements for the bandwidth part change delay time, the UE may complete a change to the new bandwidth part indicated by the bandwidth part change indicator at a timepoint not later than slot n+T_{BWP}, and the UE may transmit and/or receive a data channel scheduled by the corresponding DCI in the changed new bandwidth part. If the base station wants to schedule a data channel by using the new bandwidth part, the base station may determine time domain resource allocation regarding the data channel in consideration of the UE's bandwidth part change delay time (T_{BWP}). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI indicating a bandwidth part change will indicate a slot offset (K0 or K2) value smaller than the bandwidth part change delay time (T_{BWP}).

If the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

### [Quasi-colocation (QCL), TCI state]

In a wireless communication system, one or more different antenna ports (which may be replaced with one or more channels, signals, and combinations thereof, but in the following description of the disclosure, will be referred to as different antenna ports, as a whole, for the sake of convenience) may be associated with each other by a quasi-co-location (QCL) configuration as in Table 4 below. A TCI state is for announcing the QCL relation between a PDCCH (or a PDCCH demodulation reference signal (DRMS)) and another RS or channel, and the description that a reference antenna port A (reference RS #A) and another target antenna port B (target RS #B) are QCLed with each other means that the UE is allowed to apply some or all of large-scale channel parameters estimated in the antenna port A to channel measurement form the antenna port B. The QCL needs to be associated with different parameters according to the situation such as 1) time tracking influenced by average delay and delay spread, 2) frequency tracking influenced by Doppler shift and Doppler spread, 3) radio resource management (RRM) influenced by average gain, or 4) beam management (BM) influenced by a spatial parameter. Accordingly, four types of QCL relations are supported in NR as in Table 3 below.

**[Table 4]**

| **QCL type** | **Large-scale characteristics** |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameters may refer to some or all of various parameters such as angle of arrival (AoA), power angular spectrum (PAS) of AoA, angle of departure (AoD), PAS of AoD, transmit/receive channel correlation, transmit/receive beamforming, and spatial channel correlation.

The QCL relations may be configured for the UE through RRC parameter TCI-state and QCL-info as in Table 5 below. Referring to Table 5, the base station may configure one or more TCI states for the UE, thereby informing of a maximum of two kinds of QCL relations (qcl-Type1, qcl-Type2) regarding the RS that refers to the ID of the TCI state, that is, the target RS. Each piece of QCL information (QCL-Info) included in each TCI state includes the serving cell index and the BWP index of the reference RS indicated by the corresponding QCL information, the type and ID of the reference RS, and a QCL type as in Table 4 above.

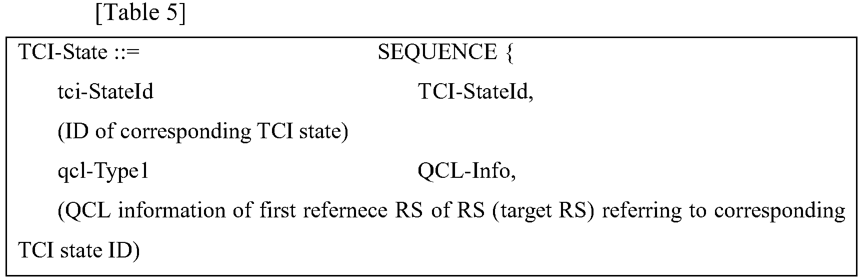

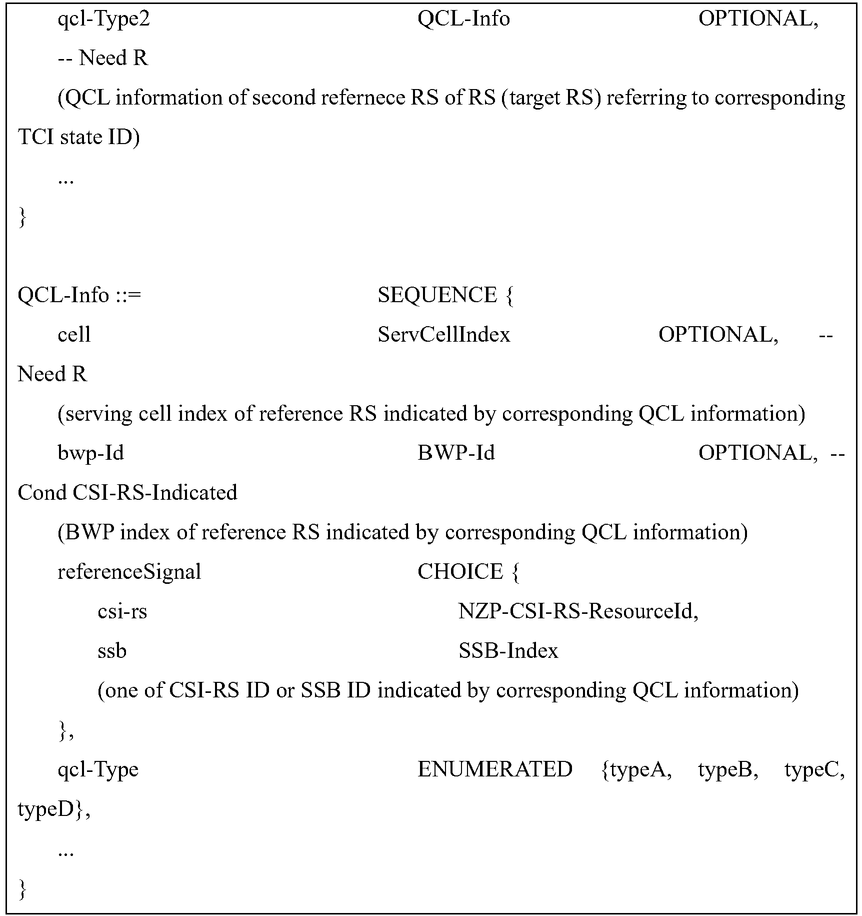

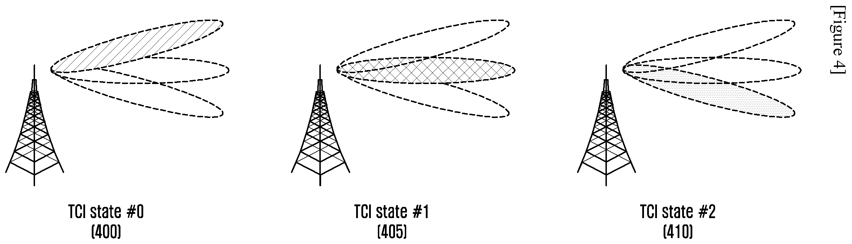

FIG. 4 illustrates an example of base station beam allocation according to TCI state configurations.

Referring to FIG. 4, the base station may transfer information regarding N different beams to the UE through N different TCI states. For example, in the case of N=3 as in FIG. 4, the base station may configure qcl-Type2 parameters included in three TCI states 400, 405, and 410 as QCL type D while associating the parameters with channel state information-reference signals (CSI-RSs) or synchronization signal blocks corresponding to different beams, thereby notifying that antenna ports referring to the different TCI states 400, 405, and 410 are associated with different spatial Rx parameters, that is, different beams.

Tables 6 to 10 below enumerate valid TCI state configurations according to the target antenna port type.

Table 6 enumerates valid TCI state configurations when the target antenna port is a CSI-RS for tracking (i.e., TRS). The TRS refers to a non-zero power (NZP) CSI-RS which is configured with no repetition parameter and trs-Info of which is configured as "true", among CRI-RSs. In Table 10, configuration no. 3 may be used for an aperiodic TRS. (Table 6: Valid TCI state configurations when the target antenna port is a CSI-RS for tracking (TRS))

**[Table 6]**

| **Valid TCI state Configuration** | **DL RS 1** | **qcl-Type1** | **DL RS2 (if configured)** | **qcl-Type2 (if configured)** |
|---|---|---|---|---|
| **1** | SSB | QCL-TypeC | SSB | QCL-TypeD |
| **2** | SSB | QCL-TypeC | CSI-RS (BM) | QCL-TypeD |
| **3** | TRS (periodic) | QCL-TypeA | TRS (same as DL RS 1) | QCL-TypeD |

Table 7 enumerates valid TCI state configurations when the target antenna port is a CSI-RS for CSI. The CSI-RS for CSI refers to an NZP CSI-RS which is configured with no parameter indicating repetition (e.g., repetition parameter) and trs-Info of which is not also configured as "true", among CRI-RSs. (Table 7: Valid TCI state configurations when the target antenna port is a CSI-RS for CSI)

**[Table 7]**

| **Valid TCI state Configuration** | **DL RS1** | **gcl-Type1** | **DL RS 2 (if configured)** | **qcl-Type2 (if configured)** |
|---|---|---|---|---|
| **1** | TRS | QCL-TypeA | SSB | QCL-TypeD |
| **2** | TRS | QCL-TypeA. | CSI-RS for BM | QCL-TypeD |
| **3** | TRS | QCL-TypeA | TRS (same as DL RS 1) | QCL-TypeD |
| **4** | TRS | QCL-TypeB | | |

Table 8 enumerates valid TCI state configurations when the target antenna port is a CSI-RS for beam management (BM) (which has the same meaning as CSI-RS for L1 RSRP reporting). The CSI-RS for BM refers to an NZP CSI-RS which is configured with a repetition parameter having a value of "on" or "off" and trs-Info of which is not configured as "true", among CRI-RSs. (Table 8: Valid TCI state configurations when the target antenna port is a CSI-RS for BM (for L1 RSRP reporting))

**[Table 8]**

| **Valid TCI state Configuration** | **DL RS 1** | **qcl-Type1** | **DL RS 2 (if configured)** | **qcl**-**Type2 (if configured)** |
|---|---|---|---|---|
| **1** | TRS | QCL-TypeA | TRS (same as DL RS 1) | QCL-TypeD |
| **2** | TRS | QCL-TypeA | CSI-RS (BM) | QCL-TypeD |
| **3** | SS/PBCH Block | QCL-TypeC | SS/PBCH Block | QCL-TypeD |

Table 9 enumerates valid TCI state configurations when the target antenna port is a PDCCH DMRS. (Table 9: Valid TCI state configurations when the target antenna port is a PDCCH DMRS)

**[Table 9]**

| **Valid TCI state Configuration** | **DL RS 1** | **qcl-Type1** | **DL RS 2 (if configured)** | **qcl-Type2 (if configured)** |
|---|---|---|---|---|
| **1** | TRS | QCL-TypeA | TRS (same as DL RS 1) | QCL-TypeD |
| **2** | TRS | QCL-TypeA | CSI-RS (BM) | QCL-TypeD |
| **3** | CSI-RS (CSI) | QCL-TypeA | CSI-RS (same as DL RS 1) | QCL-TypeD |

Table 10 enumerates valid TCI state configurations when the target antenna port is a PDSCH DMRS. (Table 10: Valid TCI state configurations when the target antenna port is a PDSCH DMRS)

**[Table 10]**

| **Valid TCI state Configuration** | **DL RS 1** | **qcl-Type1** | **DL RS 2 (if configured)** | **qcl-Type 2 (if configured)** |
|---|---|---|---|---|
| **1** | TRS | QCL-TypeA | TRS | QCL-TypeD |
| **2** | TRS | QCL-TypeA | CSI-RS (BM) | QCL-TypeD |
| **3** | CSI-RS (CSI) | QCL-TypeA | CSI-RS (CSI) | QCL-TypeD |

According to a representative QCL configuration method based on Tables 6 to 10 above, the target antenna port and reference antenna port for each step are configured and operated such as "SSB" -> "TRS" -> "CSI-RS for CSI, or CSI-RS for BM, or PDCCH DMRS, or PDSCH DMRS". Accordingly, it is possible to help the reception operation of the UE by associating statistical characteristics measurable from the SSB and TRS with respective antenna ports.

### [Regarding CA/DC]

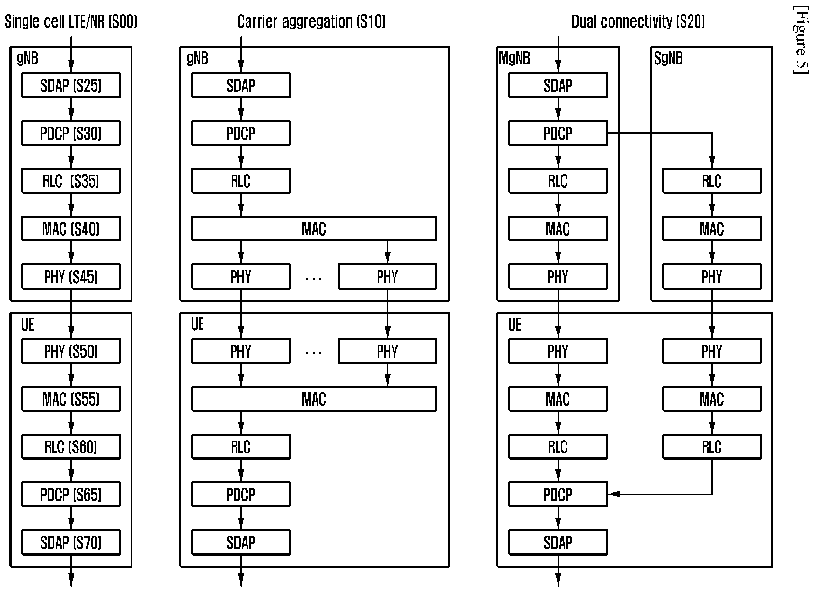

FIG. 5 illustrates radio protocol structures of a base station and a UE in single cell, carrier aggregation, and dual connectivity situations according to an embodiment of the disclosure.

Referring to FIG. 5, a radio protocol of a next-generation mobile communication system includes an NR service data adaptation protocol (SDAP) 525 or 570, an NR packet data convergence protocol (PDCP) 530 or 565, an NR radio link control (RLC) 535or 560, and an NR medium access controls (MAC) 540 or 555 on each of UE and NR base station sides.

The main functions of the NR SDAP 525 or 570 may include some of functions below.
- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, the UE may be configured, through an RRC message, whether to use the header of the SDAP layer device or whether to use functions of the SDAP layer device for each PDCP layer device or each bearer or each logical channel, and if an SDAP header is configured, the non-access stratum (NAS) QoS reflection configuration 1-bit indicator (NAS reflective QoS) and the AS QoS reflection configuration 1-bit indicator (AS reflective QoS) of the SDAP header may be indicated so that the UE can update or reconfigure mapping information regarding the QoS flow and data bearer in the uplink and downlink. The SDAP header may include QoS flow ID information indicating QoS. The QoS information may be used as data processing priority, scheduling information, etc. for supporting a smooth service.

The main functions of the NR PDCP 530 or 565 may include some of functions below.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above functions, the reordering of the NR PDCP device refers to a function for reordering PDCP PDUs received from a lower layer in sequence based on a PDCP sequence number (SN), and may include a function for delivering data in the re-ordered sequence to an upper layer. Alternatively, the reordering of the NR PDCP device may include a function of directly transferring without considering the sequence, may include a function of reordering the sequence and recording lost PDCP PDUs, may include a function of reporting the state of the lost PDCP PDUs to the transmission side, and may include a function of requesting retransmission of the lost PDCP PDUs.

The main functions of the NR RLC 535 or 560 may include some of functions below.
- Transfer of upper layer PDUs
- In-sequence delivery of upper layer PDUs
- Out-of-sequence delivery of upper layer PDUs
- Error correction through automatic repeat request (ARQ)
- Concatenation, segmentation, and reassembly of RLC SDUs
- Re-segmentation of RLC data PDUs
- Reordering of RLC data PDUs
- Duplicate detection
- Protocol error detection
- RLC SDU discard
- RLC re-establishment

In the above functions, the in-sequence delivery of the NR RLC device refers to a function of delivering RLC SDUs received from a lower layer to an upper layer in sequence. The in-sequence delivery of the NR RLC device may include a function of, if one original RLC SDU is segmented into multiple RLC SDUs and the segmented RLC SDUs are received, reassembling the RLC SDUs and delivering the reassembled RLC SDUs, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs. The in-sequence delivery of the NR RLC device may include a function of, if there is a lost RLC SDU, successively delivering only RLC SDUs before the lost RLC SDU to the higher layer, or may include a function of, if a predetermined timer has expired although there is a lost RLC SDU, successively delivering all RLC SDUs received before the timer was started to the higher layer. Alternatively, the in-sequence delivery of the NR RLC device may include a function of, if a predetermined timer is expired although there is a lost RLC SDU, delivering all the RLC SDUs received up to to the present to the higher layer in sequence. In addition, the in-sequence delivery of the NR RLC device may process RLC PDUs in the received order (regardless of the sequence number order, in order of arrival) and deliver same to the PDCP device regardless of the order (out-of-sequence delivery), and in the case of segments, may receive segments which are stored in a buffer or which are to be received later, reconfigure same into one complete RLC PDU, process, and deliver same to the PDCP device. The NR RLC layer may include no concatenation function, which may be performed in the NR MAC layer or replaced with a multiplexing function of the NR MAC layer.

In the above functions, the out-of-sequence delivery of the NR RLC device refers to a function of instantly delivering RLC SDUs received from the lower layer to the upper layer regardless of the order, may include a function of, if multiple RLC SDUs received, into which one original RLC SDU has been segmented, are received, reassembling and delivering the same, and may include a function of storing the RLC SN or PDCP SN of received RLC PDUs, and recording RLC PDUs lost as a result of reordering.

The NR MAC 540 or 555 may be connected to multiple NR RLC layer devices configured in one UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

An NR PHY layer 545 or 550 may perform operations of channel-coding and modulating upper layer data, thereby obtaining OFDM symbols, and delivering the same through a radio channel, or demodulating OFDM symbols received through the radio channel, channel-decoding the same, and delivering the same to the higher layer.

The detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as 500. Contrarily, in case that the base station transmits data to the UE, based on carrier aggregation (CA) which uses multiple carriers in a single TRP, the base station and the UE may use a protocol structure which has a single structure up to the RLC, but multiplexes the PHY layer through an MAC layer, such as 510. As another example, in case that the base station transmits data to the UE, based on dual connectivity (DC) which uses multiple carriers in multiple TRPs, the base station and the UE may use a protocol structure which has a single structure up to the RLC, but multiplexes the PHY layer through an MAC layer, such as 520.

### [Regarding UE capability report]

In LTE and NR, a UE may perform a procedure in which, while being connected to a serving base station, the UE may report capability supported by the UE to the corresponding base station. In the following description, this procedure will be referred to as a UE capability report.

The base station may transfer a UE capability enquiry message to a UE in a connected state so as to request a capability report. The message may include a UE capability request for each radio access technology (RAT) type of the base station. The UE capability request for each RAT type may include frequency band combination information supported by the UE and the like. In addition, in the case of the UE capability enquiry message, UE capability according to multiple RAT types may be requested through one RRC message container transmitted by the base station, or the base station may transfer a UE capability enquiry message including multiple UE capability requests for the respective RAT types. That is, a capability enquiry may be repeated multiple times by using one message, and the UE may configure a UE capability information message corresponding thereto and report same multiple times. In next-generation mobile communication systems, a UE capability request may be made regarding multi-RAT dual connectivity (MR-DC), such as NR, LTE, and E-UTRA-NR dual connectivity (EN-DC). The UE capability enquiry message may be transmitted initially after the UE is connected to the base station, in general, but may be requested in any condition if needed by the base station.

Upon receiving the UE capability report request from the base station in the above step, the UE configures UE capability according to band information and RAT type requested by the base station. The method in which the UE configures UE capability in an NR system is summarized below.
1. If the UE receives a list regarding LTE and/or NR bands from the base station at a UE capability request, the UE constructs band combinations (BCs) regarding EN-DC and NR standalone(SA). That is, the UE configures a candidate list of BCs regarding EN-DC and NR SA, based on bands received from the base station at a request through FreqBandList. In addition, bands have priority in the order described in FreqBandList.
2. If the base station sets "eutra-nr-only" flag or "eutra" flag and requests a UE capability report, the UE removes everything related to NR SA BCs from the configured BC candidate list. Such an operation may occur only if an LTE base station (eNB) requests "eutra" capability.
3. The UE then removes fallback BCs from the BC candidate list configured in the above step. As used herein, a fallback BC refers to a BC that can be obtained by removing a band corresponding to at least one SCell from a specific BC, and since a BC before removal of the band corresponding to at least one SCell can already cover a fallback BC, it is possible to omit same. This step is also applied in MR-DCl, that is, LTE bands are also applied. BCs remaining after the this step may constitute the final "candidate BC list".
4. The UE may select BCs appropriate for the RAT type requested by the base station, that is, BCs to report, from the final "candidate BC list". In this step, the UE configures supportedBandCombinationList in a determined order. That is, the UE configures BCs and UE capability to report according to a preconfigured rat-Type order. (nr -> eutra-nr -> eutra). In addition, the UE configures featureSetCombination regarding the configured supportedBandCombinationList and configures a list of "candidate feature set combinations" from a candidate BC list from which a list regarding fallback BCs (including capability of the same or lower level) is removed. The "candidate feature set combinations" may include all feature set combinations regarding NR and EUTRA-NR BCs, and may be acquired from feature set combinations of containers of UE-NR-Capabilities and UE-MRDC-Capabilities.
5. If the requested RAT type is eutra-nr and has an influence, featureSetCombinations is included on both containers of UE-MRDC-Capabilities and UE-NR-Capabilities. However, the feature set of NR is included only in UE-NR-Capabilities.

After the UE capability is configured, the UE transfers a UE capability information message including the UE capability to the base station. The base station performs scheduling and transmission/reception management appropriate for the UE, based on the UE capability received from the UE.

### <First Embodiment: Switching-based DL CA Scenario>

### [Motivation]

In terms of a maximum reach distance (coverage) achievable by a base station or a UE, a low band of 1GHz or lower has a superior propagation characteristic than a mid band in a range of 1-3GHz or a high band of 3GHz or higher, and thus has been usefully utilized in rural areas where base station installation is not easy or the population density is low (such an area may be defined as a first area in an embodiment of the disclosure). However, the low band has poor straight-line propagation properties and a relatively small available bandwidth, which are drawbacks. In contrast, the mid or high band has a maximum reach distance that is not greater than that of the low band, but has more advantages in terms of data transmission rate or capacity. Therefore, even though the radio wave reach distance is not as good as that of the low band, the mid or high band is a useful band in urban areas with high radio wave utilization or high population density (such an area may be defined as a second area in an embodiment of the disclosure). Based on the propagation characteristics for each band, it is common in recent network designs to deploy the mid band or high band in urban areas and to deploy the low band in rural areas, and this assumption is actually applied to establishing frequency strategies and designing mobile communication cells. However, one of the problems that may be observed in this situation is that, when a user moves from a suburb to a city or from a city to a suburb, the user frequently stays in the low band, rather than staying in the mid or high band, and performs data or voice communication, and in this case, the user is inevitable to use a low data transmission rate as compared to that of the mid or high band, which is previously pointed out as a problem of the low band.

In this case, as a method of overcoming the low data transmission rate, carrier aggregation (CA) technology may be considered. Carrier aggregation is a technology in which two or more carriers are combined to improve frequency efficiency and a maximum transmission rate. Although numerous frequency combinations that support carrier aggregation have been defined leading up to 5G, from the perspective of implementing a product that actually supports carrier aggregation, there may be a probability that transmission and reception using carrier aggregation is not available itself, or has worse performance than transmission/reception using a single carrier, depending on a signal distortion caused by propagation characteristics of frequency bands or carriers included in a combination, or on interference between a plurality of carriers, or a design of a UE that supports transmission/reception of a plurality of carriers.

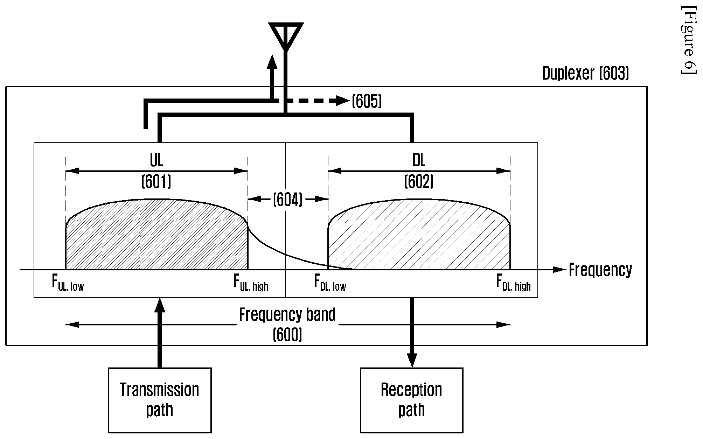

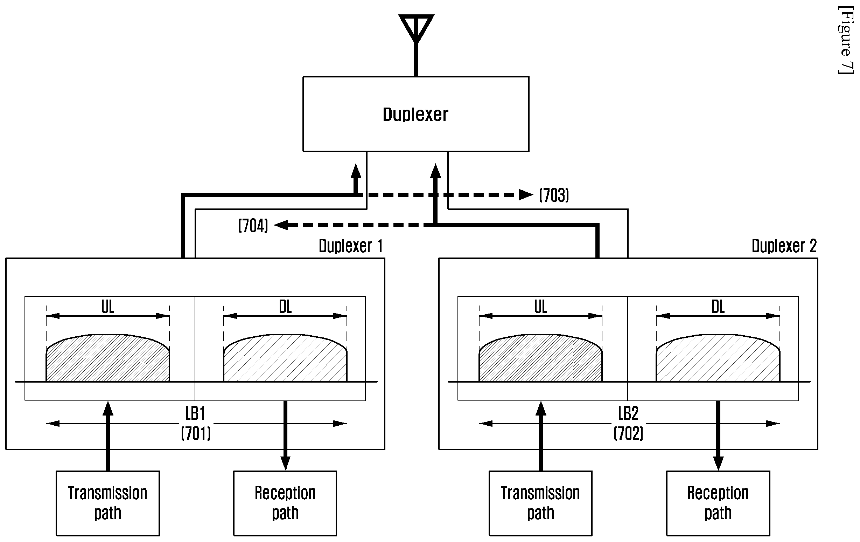

Such a situation in which carrier aggregation is not practically available or performance is poor, is observed in the case of a combination of low bands of 1GHz or low, which have large diffraction properties and thus good coverage characteristics but poor straight-line propagation properties and thus are disadvantageous in terms of interference control. In the same manner as other carrier combinations, it has been supported in the wireless access standard since the early stage, but in the aspect of UE hardware, which needs to be designed considering actual propagation characteristics, it is still difficult to support the same. Considering the current UE design method, in which most frequency bands need to be supported by limited components and resources, it is not easy to resolve such propagation characteristic problems. In the current UE hardware implementation, which needs to support most mobile communication bands in a limited space, low-band carrier aggregation may be difficult to have better performance than general single carrier transmission, for the following reasons. As shown in FIG. 6, from the perspective of a duplexer 603 that distinguishes an uplink 601 and a downlink 602 in UE hardware, uplink and downlink transmission are distinctly performed according to a frequency division multiplexing (FDD) scheme in a low band of 1GHz or less, generally. A frequency separation 604 between an uplink band and a downlink band in the same band is not large in comparison with propagation characteristics of low bands, and the duplexer designed to distinguish uplink and downlink is not precisely designed in consideration of a fractional bandwidth due to the low band propagation characteristics, and thus a signal transmitted by a UE in uplink may cause interference 605 in a downlink band. Furthermore, as shown in FIG. 7, in low-band carrier aggregation in which a plurality of low-band carriers 701 and 702 are simultaneously transmitted and received, it is necessary to consider not only the above-described problems, but also interference 703 and 704 to adjacent bands, and thus, it is practically difficult for the UE to support low-band carrier aggregation. To resolve the radio propagation characteristics problem of the low-band carrier aggregation, a method of minimizing interference between a plurality of bands via independent antenna and hardware design for each band may be considered. However, such a method may require additional costs, hardware, and space in the UE, which may cause hardware complexity. Such a constraint on the UE implementation hinders the simultaneous use of a plurality of low bands, and is a barrier to fully utilizing data transmission rates and capacity in areas where low-band utilization is high.

As one method to increase the utilization of a plurality of low bands and improve efficiency, a method of switching low-band carrier aggregation to downlink inter-carrier switching and performing transmission and reception may be considered, and in this manner, when transmission/reception is performed alternately with time difference, existing low-band carrier aggregation may be simultaneously transmitted/received and factors that degrade the carrier aggregation performance may be removed. The following embodiments specifically describe various scenarios in which a UE transmits and receives low-band carrier aggregation by alternating (switching) between respective bands or carriers. In various embodiments of the disclosure, a low band may be defined as a first band or a first frequency band, a mid band may be defined as a second band or a second frequency band, and a high band may be defined as a third band or a third frequency band. In addition, since the above-described problem mainly occurs in the low band, the following description will focus on the low band to describe a method of increasing the utilization of frequency bands, but the following methods may also be applied to the mid band or high band. In various embodiments of the disclosure, downlink transmission may refer to base station downlink transmission and UE downlink reception, and uplink transmission may refer to UE uplink transmission and base station uplink reception.

### [Method 1-1]

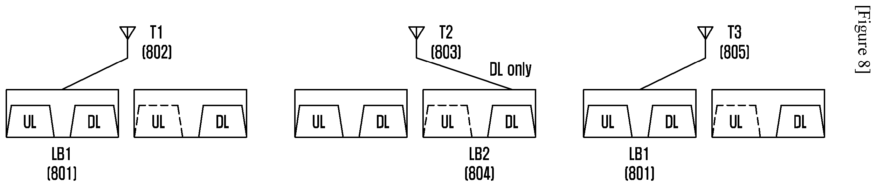

If a UE supports reception of downlink carrier aggregation based on inter-carrier switching as described above, three major situations may be considered. A first case is that, as in FIG. 8, during an interval T1 802 in which a transmission and/or reception operation is performed in only one low band (LB) 1 801 of the two low bands, it is configured such that a reception operation is performed without transmission in another band LB2 804 in a next time T2 803. In this case, the other band LB2 804 may signify only downlink transmission in a general FDD band, or may be a downlink-only band (supplementary downlink (SDL)). A difference from a conventional general carrier aggregation operation in the example of FIG. 8 is that, regardless of the case, in the second interval T2 803, only downlink transmission occurs in one band LB2 804, and no uplink transmission occurs. In this case, transmission and reception may occur in only one band at a particular moment, or only downlink reception may be performed in one band, and thus problems that occur in the conventional low band carrier aggregation may be solved. Finally, in a next interval T3 805, the operation as in T1 802 is repeated and general single-band transmission and reception occur.

### [Method 1-2]

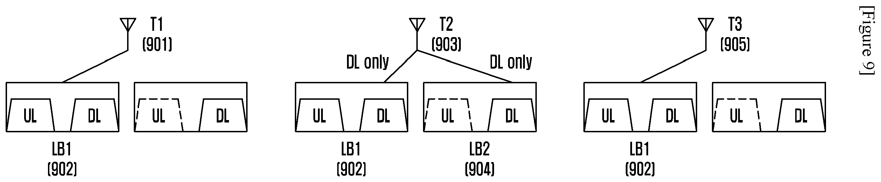

A second method is that, as in FIG. 9, in an interval T1 901, transmission and/or reception is first performed in one band LB1 902, and then in an interval T2 903, all uplink transmissions are suspended and both of the downlink carrier reception in the two bands is performed. Specifically, it may be configured such that a reception operation without transmission is performed in both the LB1 902 and LB2 904 bands in the interval T2 903 subsequent to the interval T1 901 in which the transmission and/or reception operation is performed only in one band LB 1 902 of the low bands. In this instance, the band LB2 904 which is a band operating in the second interval T2 903 may indicate only downlink transmission in a general FDD band or may be a downlink-only band (supplementary downlink (SDL)). In the example of FIG. 9, regardless of the case, in the second interval T2 903, only downlink transmission occurs in both of the two bands (LB 1 902 and LB2 903), and no uplink transmission occurs, which is a difference from a conventional general carrier aggregation operation. In this case, transmission and reception occurs in only one band at any moment, or only downlink reception is performed in the two bands, and thus problems that occur in the conventional low-band carrier aggregation may be resolved. Finally, in a next interval T3 905, the operation as in T1 901 is repeated and general single-band transmission occurs.

### [Method 1-3]

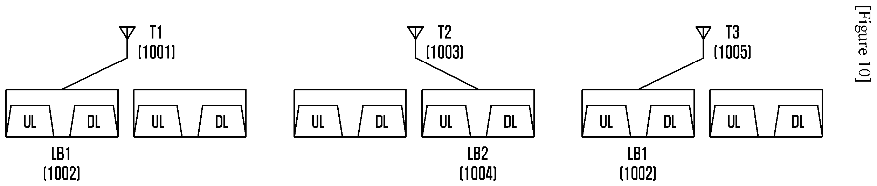

A third method is that, as in FIG. 10, in an interval T1 1001, transmission and/or reception is performed in one band LB1 1002, and in a next interval T2 1003, transmission and/or reception is performed by changing a band to another band LB2 1004. Specifically, in the interval T1 1001 in which a transmission and/or reception operation is performed in only one band LB1 1002 of the low bands, it may be configured such that the transmission and/or reception in LB1 1002 is suspended and a transmission and/or reception operation is performed in LB2 1004 in the next interval T2 1003. In this case, since LB2 1004 is a band in which both transmission and reception operations occur, the example of FIG. 10 may be incapable of assuming an SDL band. In this example, a difference from a conventional general carrier aggregation operation may be that transmission and reception operations occur in only one band in any interval. In this case, since transmission and reception occur in only one band without carrier aggregation at any moment, existing problems that occur in the conventional low band carrier aggregation may be resolved. Finally, in a next interval T3 1005, the operation as in T1 1001 is repeated and general single FDD band transmission occurs.

Summarizing methods 1-1, 1-2, and 1-3, when a UE does not support general low-band carrier aggregation, a method of time interval-based carrier switching may be considered as a method of overcoming the UE's hardware limitations while efficiently using low-band frequencies. In this case, in switching scenarios, a first interval T1 and a third interval T3 may be fixed as intervals for general single-band (LB1) transmission and reception, and the UE may select one of methods 1-1, 1-2, and 1-3 as a scenario that may occur in a second interval T2 and apply the same during T2.

In the above methods 1-1, 1-2, and 1-3, the expression "transmitting in a specific LB in a specific interval (T)" means that transmission is available in the corresponding LB in the corresponding interval, and does not mean that transmission always occurs. In other words, when there is a schedule for transmission, a transmission operation may be performed according to the schedule. The expression "receiving in a specific LB in a specific interval (T)" means that reception is available in the corresponding LB of the corresponding interval, and does not mean that reception always occurs. That is, when there is a schedule for reception, a reception operation may be performed according to the schedule.

### <Second Embodiment: Method of Configuring UE Capability According to a UE Structure for Supporting DL CA based on Switching>

In the following description, there may be provided a detailed description on a method in which, when a UE performs the switching-based downlink carrier aggregation to maximize frequency efficiency, the UE selects one of the above-described three scenarios where the UE supports low-band carrier aggregation via downlink inter-carrier switching, based on a hardware structure of the UE or other causes, and reports the selected scenario as a UE capability, and operations of the UE and a base station performed based on the reporting of the UE capability.

First, a carrier aggregation combination in which the UE performs carrier aggregation based on an inter-carrier switching operation in low-band carrier aggregation may be configured together with other combinations for general carrier aggregation. In addition, the UE may report a band combination capable of performing switching-based downlink reception via a new UE capability [DLRxSwitchingBandPair] for each band combination, and may select a switching option supported by the UE and report the same to the base station via UE sib-capability of [DLRxSwitchingBandPair], such as, [downlinkRxSwitchingPeriod1], [downlinkRxSwitchingPeriod2], or [downlinkRxSwitchingPeriod3]. In various embodiments of the disclosure, [downlinkRxSwitchingPeriod1] may correspond to a capability indicating a switching option of method 1-1, [downlinkRxSwitchingPeriod2] may correspond to a capability indicating a switching option of method 1-2, and [downlinkRxSwitchingPeriod3] may correspond to a capability indicating a switching option of method 1-3. If the UE is instructed by the base station to receive one of the combinations reported via [DLRxSwitchingBandPair], the UE may operate in the following ways according to the UE capability [downlinkRxSwitchingPeriod1], [downlinkRxSwitchingPeriod2], or [downlinkRxSwitchingPeriod3] reported together therewith. In various embodiments of the disclosure, parameters such as DLRxSwitchingBandPair and downlinkRxSwitchingPeriod are for describing the above-described capabilities of the UE and the names of the parameters are not limited thereto.
- [Method 2-1] In the case of switching to only a downlink reception operation in a band LB2 during an interval T2: If a UE supports [method 1-1] via [downlinkRxSwitchingPeriod1], for example, if [downlinkRxSwitchingPeriod1] exists, carrier aggregation across two corresponding bands is received based on switching, a base station may schedule both downlink and uplink in a band LB1 during a first interval T1, and schedule only downlink in a band LB2 during the second interval T2. From a next interval T3, the operations performed as in the intervals T1 and T2 may be alternately and repeatedly scheduled until bandwidth combination transmission of the corresponding combination is terminated. In this case, the UE follows the base station's scheduling indication, and as previously mentioned, an SDL band, which is a downlink-only band, is considered as the band LB2, but the band LB2 is not limited thereto and may be extended to a general FDD band.
- [Method 2-2] In the case of switching to a downlink reception operation in which bands LB1 and LB2 are combined, during an interval T2: If a UE supports [Method 1-2] via [downlinkRxSwitchingPeriod2], for example, if [downlinkRxSwitchingPeriod2] exists, carrier aggregation across the bands LB1 and LB2 is received based on switching, and a base station may schedule both downlink and uplink in a single band in the band LB1 during a first interval T1, and may schedule only downlink carrier aggregation by combining the bands LB1 and LB2 during the second interval T2. From a next T3 interval, the operations performed as in the intervals T1 and T2 may be alternately and repeatedly scheduled until bandwidth combination transmission of the corresponding combination is terminated. In this case, the UE follows the base station's scheduling indication, and as previously mentioned, an SDL band, which is a downlink-only band, is considered as the band LB2, but the band LB2 is not limited thereto and may be extended to a general FDD band.
- [Method 2-3] In the case of switching to a band LB2 during an interval T2: If a UE supports [Method 1-3] via [downlinkRxSwitchingPeriod3], for example, if [downlinkRxSwitchingPeriod3] exists, carrier aggregation across two corresponding bands is received based on switching, and a base station may schedule both downlink and uplink in a single band in a band LB1 during a first interval T1, and switch to the band LB2 and schedule both downlink and uplink in a single band during the second interval T2. From a next interval T3, the operations performed as in the intervals T1 and T2 may be alternately and repeatedly scheduled until bandwidth combination transmission of the corresponding combination is terminated. In this case, the UE follows the base station's scheduling indication, and only a general FDD band may be considered as the band LB2.

In summary, a UE may configure whether to support low-band carrier aggregation (or UE capability for the same) by itself, considering designs of the UE's hardware, a receiver, and the like, and may include, in BandCombinationList, a band combination of low-band carrier aggregation supportable by switching, together with an existing carrier aggregation band combination list, and may report the same to the base station. In various embodiments of the disclosure, it has been described that information associated with a band combination of low-band carrier aggregation supportable by switching is included in BandCombinationList and is reported, but the disclosure is not limited thereto, and it is not excluded that the information is included in other information fields of a message for reporting UE capability information. Among these, a list of carrier aggregation supportable based on switching may be separately reported for each band combination via [DLRxSwitchingBandPair], and also, one or more supported switching options from among [downlinkRxSwitchingPeriod1], [downlinkRxSwitchingPeriod2], or [downlinkRxSwitchingPeriod3] may be reported to the base station. In this case, when the base station indicates a combination list included in [DLRxSwitchingBandPair] to the UE, the base station may configure a schedule based on information included in [downlinkRxSwitchingPeriod1], [downlinkRxSwitchingPeriod2], or [downlinkRxSwitchingPeriod3]. For example, in a case where the base station schedules, for the UE, a combination included in [DLRxSwitchingBandPair], the base station may indicate, to the UE, uplink and downlink transmission and/or reception in only one band LB1 from an interval T1 in which carrier aggregation transmission starts, and the UE may perform uplink transmission and downlink reception in the band LB1 indicated by the base station. In an interval T2, the base station may determine whether to schedule only downlink in a band LB2 (method 2-1), or to schedule only downlink transmission by combining the band LB1 and the band LB2 (method 2-2), or to switch to the band LB2 band and schedule uplink and downlink (method 2-3), by referring to [downlinkRxSwitchingPeriod1], [downlinkRxSwitchingPeriod2], or [downlinkRxSwitchingPeriod3] reported by the UE together with [DLRxSwitchingBandPair], and the UE may perform uplink transmission and/or downlink reception based on the configuration determined by the base station.

### <Third Embodiment: Switching Time and Interval Configuration and Signaling/UE Capability Reporting Method>

In the following description, in a case where a UE performs low-band carrier aggregation downlink reception based on switching, a method of configuring a condition for switching, for example, configuring a location within a carrier reception interval in which a change from T1 to T2 or from T2 to T3 occurs, and reporting the same to a base station as UE capability will be described in detail. In addition, a method of configuring a maximum time (period) during which the base station does not perform downlink transmission so that the UE is capable of changing a receiver when switching occurs, and reporting the same to the base station as UE capability will be described in detail.

As described above, the UE may configure a switching combination to which a switching operation is applied among low-band carrier combinations, in BandCombinationList that is a carrier aggregation combination list supporting other combinations for general carrier aggregation as well. In addition, the UE may report the corresponding downlink-switching-based combination via a new UE capability [DLRxSwitchingBandPair], in which case the UE may configure a location and a period in which switching from T1 to T2 or from T2 to T3 occurs, and report the same to the base station, as UE capability.

For example, a switching period that may be reported by the UE via a new UE capability [downlinkRxSwitchingPeriod1], [downlinkRxSwitchingPeriod2], or [downlinkRxSwitchingPeriod3] may generally be in units of symbols included in a carrier, and this may be converted to a time unit based on a sub-carrier spacing (SCS) supporting the same. That is, the switching period that may be reported by the UE via the UE capability [downlinkRxSwitchingPeriod] may be at least 1 symbol time and an integer multiple thereof, and this may be due to UE implementation such as a UE receiver hardware structure. In general, according to a supported band and a receiver structure for each band, and when a single receiver supports only a single band, a receiver control time may be reduced compared to a structure of a single receiver designed to support a plurality of bands. In this way, in order to support various UE designs, a switching time that may be reported by the UE to the base station via UE capability [downlinkRxSwitchingPeriod] may be one of the values in Table 11 according to SCS.

**[Table 11]**

| Symbol | 15kHz (us) | 30kHz (us) |
|---|---|---|
| 1 | 70 | 35 |
| 2 | 140 | 70 |
| 3 | 210 | 105 |
| 4 | 280 | 140 |
| 5 | 350 | 175 |
| 6 | 420 | 210 |

Based on the above-described embodiments and [Table 11], the new UE capability [DLRxSwitchingBandPair] may be reported as in [Table 12] below.

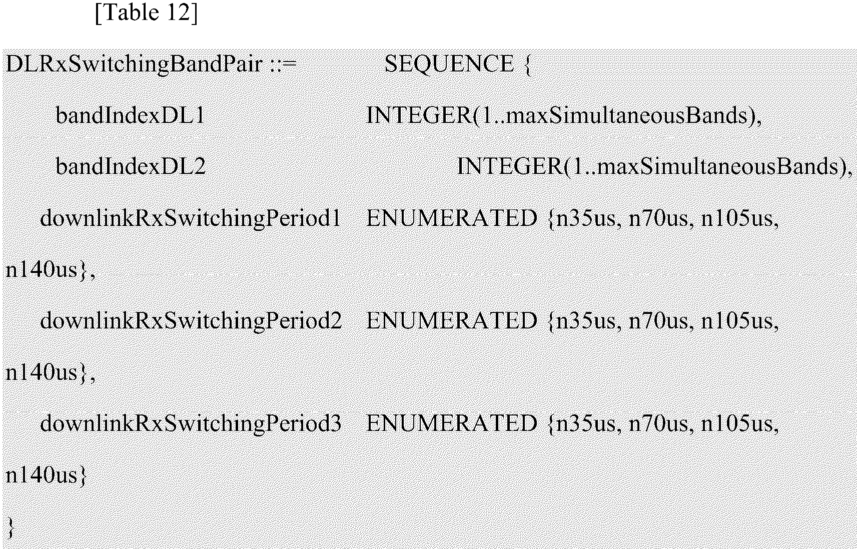

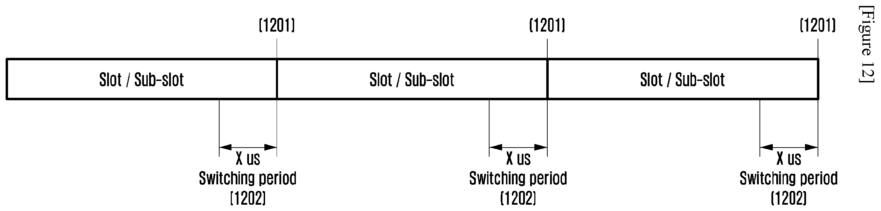

In addition, the location at which switching from T1 to T2 or from T2 to T3 occurs may be configured via RRC, and an interval in which switching may occur may be variously configured, considering a carrier type and other downlink channels, or the like. For example, in an embodiment of the disclosure, as shown in FIG. 12, in consideration of a characteristic that a downlink control channel (PDCCH) essential for the base station to control the UE is disposed in a front part of a downlink slot, it may be assumed that a switching operation occurs from S0-X (us) that is a switching time (Xus) 1202 ahead of the last part (S0) 1201 of the carrier slot, wherein switching time (Xus) 1202 is reported by the UE via [downlinkRxSwitchingPeriod1], [downlinkRxSwitchingPeriod2], or [downlinkRxSwitchingPeriod3]. In this case, the UE may configure [downlinkRxSwitchingPeriodLocation] to TRUE. If it is assumed that the UE does not start switching from a time that is prior by T0-X (us) to the end of the downlink carrier slot but switches at other carrier locations, the UE may report [downlinkRxSwitchingPeriodLocation] as FALSE. In various embodiments of the disclosure, downlinkRxSwitchingPeriodLocation is merely an example for describing the above-described functions, and the name of the parameter is not limited thereto.

Summarizing the above-described embodiments, when supporting low-band carrier aggregation via inter-carrier switching, the UE may operate according to each scenario as follows.

### [Method 3-1]

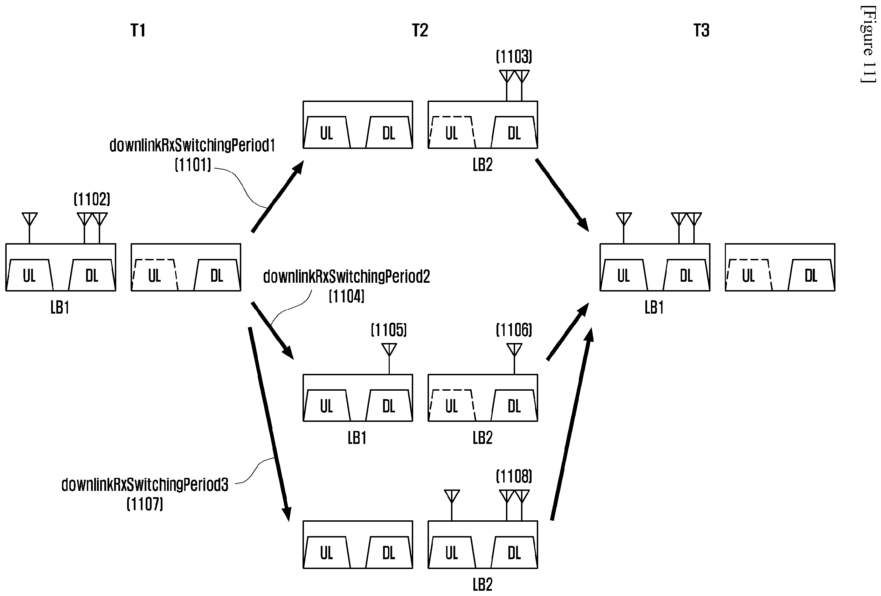

As in FIG. 11, if inter-band downlink carrier aggregation is configured and UE capability [downlinkRxSwitchingPeriod1] 1101 exists, specifically, if two downlink carriers are in different bands, a UE may support switching between the two downlink carriers in the time domain according to a base station's scheduling indication and rank adaptation. Here, supporting switching between two downlink carriers means time difference switching between an uplink carrier UL1 and a downlink carrier DL1 in a band LB1 and a downlink carrier DL2 in a band LB2 in a first interval T1, and in this case, the UE needs to support 2-layer reception in both of downlink carriers DL1 1102 and DL2 1103 associated with switching, and also needs to support single-layer transmission using one antenna port for each. Here, the carrier DL2 may be a carrier of a general band in which both uplink and downlink transmissions are available, or may be a carrier of a downlink-only band (SDL). In other words, layers of downlink carriers supported at any one moment are same.

As in FIG. 12, a location of a switching-enabled period in which the UE is capable of performing switching may be the switching time X 1202 ahead of the start 1201 of each of the downlink carrier DL1 or downlink carrier DL2, as indicated by the base station via RRC signaling [downlinkRxSwitchingPeriodLocation]. Here, the downlink switching length X needs to be smaller than [downlinkRxSwitchingPeriod1] reported as UE capability.

In the case of switching from one carrier to another carrier, when downlink transmission on a carrier before switching is not scheduled or configured for at least X µs before a point in time at which the UE is scheduled or configured to start reception on a carrier after switching, the switching time needs to be completely included in a time gap between a reception end time on the carrier before switching and a reception start time on the carrier after switching.

### [Method 3-2]

As in FIG. 11, if inter-band downlink carrier aggregation is configured and UE capability [downlinkRxSwitchingPeriod2] 1104 exists, specifically, if two downlink carriers are in different bands, a UE may support switching between the two downlink carriers in the time domain according to a base station's scheduling indication and rank adaptation. Here, supporting switching between two downlink carriers means time difference switching between a uplink carrier UL1 and a downlink carrier DL1 in a band LB1 in a first interval T1 and the downlink carrier DL1 in the band LB1 and a downlink carrier DL2 in a band LB2 in a second interval T2, and in this case, the UE needs to support at least one layer reception in downlink carriers DL1 1105 and DL2 1106 associated with switching. Here, the carrier DL2 may be a carrier of a general band in which uplink and downlink transmission and reception are both available, or may be a carrier of a downlink-only band (SDL). That is, the total number of downlink carrier layers supported at any given moment is the same.

As in FIG. 12, a location of a switching-enabled period in which the UE is capable of performing switching may be the switching time X 1202 ahead of the start 1201 of each of the downlink carrier DL1 or downlink carrier DL2, as indicated by the base station via RRC signaling [downlinkRxSwitchingPeriodLocation]. Here, the downlink switching length X needs to be smaller than [downlinkRxSwitchingPeriod2] reported as UE capability.

In the case of switching from one carrier to another carrier, when downlink transmission on a carrier before switching is not scheduled or configured for at least X µs before a point in time at which the UE is scheduled or configured to start reception on a carrier after switching, the switching time needs to be completely included in a time gap between a reception end time on the carrier before switching and a reception start time on the carrier after switching.

### [Method 3-3]

As in FIG. 11, if inter-band downlink carrier aggregation is configured and UE capability [downlinkRxSwitchingPeriod3] 1107 exists, specifically, if two downlink carriers are in different bands, a UE may support switching between the two downlink carriers in the time domain according to a base station's scheduling indication and rank adaptation. Here, supporting switching between two downlink carriers means time difference switching between a uplink carrier UL1 and a downlink carrier DL1 of a band LB1 in a first interval T1 and a uplink carrier UL2 and a downlink carrier DL2 of a band LB2 in a second interval T2, and in this case, the UE needs to support 2-layer reception in both downlink carriers DL1 1102 and DL2 1108 associated with switching, and also need to support single-layer transmission using one antenna port for each. That is, the total number of downlink carrier layers supported at a given moment is the same.

As in FIG. 12, a location of a switching-enabled period in which the UE is capable of performing switching may be the switching time X 1202 ahead of the start 1201 of each of the downlink carrier DL1 or downlink carrier DL2, as indicated by the base station via RRC signaling [downlinkRxSwitchingPeriodLocation]. Here, the downlink switching length X needs to be smaller than [downlinkRxSwitchingPeriod2] reported as UE capability.

In the case of switching from one carrier to another carrier, when downlink transmission on a carrier before switching is not scheduled or configured for at least X µs before a point in time at which the UE is scheduled or configured to start reception on a carrier after switching, the switching time needs to be completely included in a time gap between a reception end time on the carrier before switching and a reception start time on the carrier after switching.

Although the above describes embodiments 1, 2, and 3 separately, this is for the sake of description, and all the embodiments 1, 2, and 3 provide a switching method for efficiently using a carrier according to the disclosure. Accordingly, embodiments 1, 2, and 3 may each be performed independently, and may also be implemented in combination with each other. Particularly, it will be apparent to those skilled in the art that a combination of method 1-1, method 2-1, and method 3-1, a combination of method 1-2, method 2-2, and method 3-2, and a combination of method 1-3, method 2-3, and method 3-3 are available, according to the description of each embodiment.

For example, in an embodiment of the disclosure, the UE may determine capability for carrier switching. For example, there may be scenarios for carrier switching, such as method 1-1, method 1-2, and method 1-3. Such UE capability may be determined based on the UE's hardware limitations, characteristics of a frequency band, characteristics of a surrounding area, and the like.

The UE capability for supporting the above-described scenarios may be reported to the base station according to the method of the second embodiment. For example, the base station may transmit a UE capability report request message to the UE. The UE may transmit UE capability information to the base station in response to the UE capability report request message. The UE capability information may include information related to carrier switching. For example, DLRxSwitchingBandPair described via the second embodiment, information corresponding to DLRxSwitchingBandPair, downlinkRxSwitchingPeriod described in the third embodiment, and the information described in Table 12 may be included.

Meanwhile, the information related to carrier switching may be indicated via explicit information, or may be indicated via an implicit method. For example, in a case where the information related to carrier switching is reported to the base station, the base station may determine that the corresponding UE has capability for carrier switching.

The UE may report the UE capability information to the base station according to the above-described method, and the base station having received the same may perform a scheduling operation based on carrier switching, based on the UE capability information. For example, the UE and the base station may perform capability information reporting and scheduling operations according to the method described in method 2-1, method 2-2, or method 2-3.

When switching occurs according to the method, carrier switching may be performed at a switching time point identified according to method 3-1, method 3-2, or method 3-3 described in the third embodiment.

The first embodiment, the second embodiment, and/or the third embodiment may be implemented in combination with each other.

The above-described flowchart illustrates an exemplary method that may be implemented in accordance with the principles of the disclosure, and various changes may be made to the method illustrated in the flowchart in the specification. For example, although illustrated as a series of steps, various steps of respective drawings may overlap, occur in parallel, occur in a different order, or occur multiple times. In other examples, respective steps may be omitted or replaced with other steps.

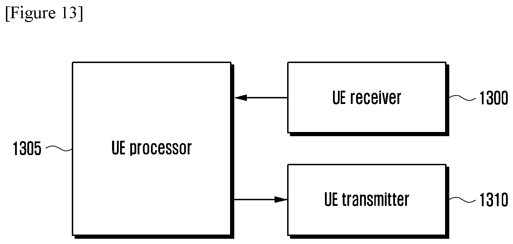

FIG. 13 illustrates a structure of a UE in a wireless communication system according to an embodiment of the disclosure.

Referring to FIG. 13, the UE may include a transceiver, which refers to a UE receiver 1300 and a UE transmitter 1310 as a whole, a memory (not illustrated), and a UE processor 1305 (or UE controller or processor). The transceiver 1300 and 1310, the memory, and the UE processor 1305 of the UE may operate according to at least one or a combination of methods corresponding to the above-described embodiments. However, components of the UE are not limited to the illustrated example. For example, the UE may include a larger or smaller number of components than those described above. Furthermore, in a particular case, the transceiver, the memory, and the processor may be implemented in the form of a single chip.

The transceiver 1300 and 1310 may transmit/receive signals with base stations. Here, the signals may include control information and data. To this end, the transceiver 1300 and 1310 may include an RF transmitter configured to up-convert and amplify the frequency of transmitted signals, and an RF receiver configured to low-noise-amplify received signals and down-convert the frequency thereof. However, this is only an embodiment of the transceiver 1300 and 1310, and the components of the transceiver 1300 and 1310 are not limited to the RF transmitter and the RF receiver.

In addition, the transceiver 1300 and 1310 may receive signals through a radio channel, output same to the processor 1305, and transmit signals, output from the processor 1305, through the radio channel.

The memory may store programs and data necessary for the operation of the UE. In addition, the memory may store control information or data included in signals transmitted/received by the UE. The memory may include a storage medium such as a ROM, a RAM, a hard disk, a CD-ROM, and a DVD, or a combination of storage media. In addition, the memory may include multiple memories.

Furthermore, the processor 1305 may control a series of processes so that the UE can operate according to the above-described embodiments. For example, the processor 1305 may perform or control the UE's operations for performing at least one or a combination of the methods according to embodiments of the disclosure. The processor 1305 may include multiple processors, and the processor may perform the control operations for the components of the UE by executing the programs stored in the memory.

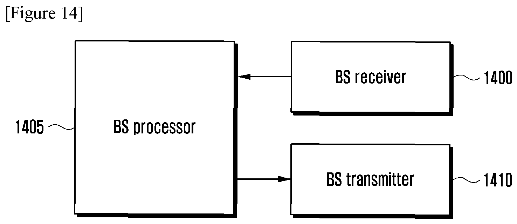

FIG. 14 illustrates a structure of a base station in a wireless communication system according to an embodiment of the disclosure.

Referring to FIG. 14, the base station may include a transceiver, which refers to a base station receiver 1400 and a base station transmitter 1410 as a whole, a memory (not illustrated), and a base station processor 1405 (or base station controller or processor). The transceiver 1400 and 1410, the memory, and the base station processor 1405 of the base station may operate according to at least one or a combination of methods corresponding to the above-described embodiments. However, components of the base station are not limited to the illustrated example. For example, the base station may include a larger or smaller number of components than those described above. Furthermore, the transceiver, the memory, and the processor may be implemented in the form of a single chip.

The transceiver 1400 and 1410 may transmit/receive signals with UEs. Here, the signals may include control information and data. To this end, the transceiver 1400 and 1410 may include an RF transmitter configured to up-convert and amplify the frequency of transmitted signals, and an RF receiver configured to low-noise-amplify received signals and down-convert the frequency thereof. However, this is only an embodiment of the transceiver 1400 and 1410, and the components of the transceiver 1400 and 1410 are not limited to the RF transmitter and the RF receiver.

In addition, the transceiver 1400 and 1410 may receive signals through a radio channel, output same to the processor 1405, and transmit signals, output from the processor 1405, through the radio channel.

The memory may store programs and data necessary for the operation of the base station. In addition, the memory may store control information or data included in signals transmitted/received by the base station. The memory may include a storage medium such as a ROM, a RAM, a hard disk, a CD-ROM, and a DVD, or a combination of storage media. In addition, the memory may include multiple memories.

The processor 1405 may control a series of processes so that the base station can operate according to the above-described embodiments of the disclosure. For example, the processor 1405 may perform or control the base station's operations for performing at least one or a combination of the methods according to embodiments of the disclosure. The processor 1405 may include multiple processors, and the processor may perform the control operations for the components of the base station by executing the programs stored in the memory.

Methods disclosed in the claims or methods according to the embodiments described in the specification of the disclosure may be implemented by hardware, software, or a combination of hardware and software.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, the program may be stored in a memory configured as a combination of some or all of them. In addition, a plurality of such memories may be included.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. In addition, a separate storage device on the communication network may access the device performing embodiments of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural, and therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. In addition, the above respective embodiments may be employed in combination, as necessary. As an example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as time division duplex (TDD) LTE, and 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

## Claims

1. A method performed by a user equipment (UE) in a wireless communication system, the method comprising:
receiving, from a base station, a UE capability enquiry message; and
transmitting, to the base station, a UE capability information message including first information indicating support for low band-low band (LB-LB) carrier aggregation (CA) based on switching between a first low band (LB) supporting frequency division duplex (FDD) and a second LB supporting a supplementary downlink (SDL), based on reception of the UE capability enquiry message,
wherein, based on the first information, reception is not performed in the SDL of the second LB in a first interval in which transmission or reception is performed in an FDD band of the first LB, and transmission or reception is not performed in the FDD band of the first LB in a second interval in which reception is performed in an SDL band of the second LB.

2. The method of claim 1, wherein the UE capability information message includes second information indicating a length of a switching time between the first LB and the second LB, and
wherein the length of the switching time is in unit of microseconds.

3. The method of claim 2, wherein switching between the first LB and the second LB is performed in a last slot of the first interval.

4. The method of claim 1, wherein the UE capability information message includes second information indicating support for the LB-LB CA based on switching between the first LB supporting the FDD and the second LB supporting the SDL, and
wherein, based on the second information, reception is not performed in the SDL of the second LB in the first interval, and a reception operation of the first LB is performed in the second interval.

5. A method performed by a base station in a wireless communication system, the method comprising:
transmitting, to a user equipment (UE), a UE capability enquiry message; and
receiving, from the UE, a UE capability information message including first information indicating support for low band-low band (LB-LB) carrier aggregation (CA) based on switching between a first low band (LB) supporting frequency division duplex (FDD) and a second LB supporting a supplementary downlink (SDL), based on transmission of the UE capability enquiry message,
wherein, based on the first information, reception is not performed in the SDL of the second LB in a first interval in which transmission or reception is performed in an FDD band of the first LB, and transmission or reception is not performed in the FDD band of the first LB in a second interval in which reception is performed in an SDL band of the second LB.

6. The method of claim 5, wherein the UE capability information message includes second information indicating a length of a switching time between the first LB and the second LB, and
wherein the length of the switching time is in unit of microseconds.

7. The method of claim 6, wherein the switching between the first LB and the second LB is performed in a last slot in the first interval.

8. The method of claim 5, wherein the UE capability information message includes second information indicating support for the LB-LB CA based on switching between the first LB supporting the FDD and the second LB supporting the SDL, and
wherein, based on the second information, reception is not performed in the SDL of the second LB in the first interval, and a reception operation of the first LB is performed in the second interval.

9. A user equipment (UE) in a wireless communication system, the UE comprising:
a memory storing instructions; and
a processing circuit connected to the memory, and configured to cause, at least partially based on execution of the instructions, the UE to
receive, from a base station, a UE capability enquiry message, and
transmit, to the base station, a UE capability information message including first information indicating support for low band-low band (LB-LB) carrier aggregation (CA) based on switching between a first LB supporting frequency division duplex (FDD) and a second LB supporting a supplementary downlink (SDL), based on reception of the UE capability enquiry message,
wherein, based on the first information, reception is not performed in the SDL of the second LB in a first interval in which transmission or reception is performed in an FDD band of the first LB, and transmission or reception is not performed in the FDD band of the first LB in a second interval in which reception is performed in an SDL band of the second LB.

10. The UE of claim 9, wherein the UE capability information message includes second information indicating a length of a switching time between the first LB and the second LB, and
wherein the length of the switching time is in unit of microseconds.

11. The UE of claim 10, wherein the switching between the first LB and the second LB is performed in a last slot of the first interval.

12. The UE of claim 9, wherein the UE capability information message includes second information indicating support for the LB-LB CA based on switching between the first LB supporting the FDD and the second LB supporting the SDL, and
wherein, based on the second information, a reception is not performed in the SDL of the second LB in the first interval and a reception operation of the first LB is performed in the second interval.

13. A base station in a wireless communication system, the base station comprising:
a memory storing instructions; and
a processing circuit connected to the memory, and configured to cause, at least partially based on execution of the instructions, the base station to
transmit, to a user equipment (UE), a UE capability enquiry message, and
receive, from the UE, a UE capability information message including first information indicating support for low band-low band (LB-LB) carrier aggregation (CA) based on switching between a first LB supporting frequency division duplex (FDD) and a second LB supporting a supplementary downlink (SDL), based on transmission of the UE capability enquiry message,
wherein, based on the first information, reception is not performed in the SDL of the second LB in a first interval in which transmission or reception is performed in an FDD band of the first LB, and transmission or reception is not performed in the FDD band of the first LB in a second interval in which reception is performed in an SDL band of the second LB.

14. The base station of claim 13, wherein the UE capability information message includes second information indicating a length of a switching time between the first LB and the second LB, and
wherein the length of the switching time is in unit of microseconds.

15. The base station of claim 14, wherein the switching between the first LB and the second LB is performed in a last slot of the first interval.
